# EUROPEAN PATENT APPLICATION

(11) **EP 4 679 600 A1**
(43) Date of publication of application: **14.01.2026**
(21) Application number: 24188000.4
(22) Date of filing: 11.07.2024
(51) Int. Cl.: H01M 50/247, B05B 5/00, H01M 50/271

(54) **BATTERY PACK FOR AN AEROSOL GENERATING APPARATUS**

(71) Applicant: Imperial Tobacco Limited, Bristol, BS3 2LL (GB)
(72) Inventor: The designation of the inventor has not yet been filed
(74) Representative: Mewburn Ellis LLP

(57) **Abstract**

There is provided a battery pack for an aerosol generating apparatus. The battery pack comprises a housing having an open end for insertion of a battery into the housing, and an end cap mountable to the housing so as to close the open end of the housing. The the end cap comprises at least one electrical contact provided on an inner surface of the end cap. The end cap is axially slidable relative to the housing from an operation configuration to a removal configuration in which the at least one electrical contact is spaced from the open end of the housing by a greater distance than in the operation configuration. The battery pack further comprises a locking arrangement configured to lock the end cap to the housing in the removal configuration such that the end cap is axially fixed relative to the housing. There is also provided an aerosol generaint apparatus comprising the battery pack, and a method of removing a battery from the aerosol generating apparatus.

## Description

### FIELD

The present disclosure relates to a battery pack for an aerosol generating apparatus, an aerosol generating apparatus comprising the battery pack, and a method of removing a battery from an aerosol generating apparatus.

### BACKGROUND

A typical aerosol generating apparatus may comprise: a power supply; an aerosol generating unit that is driven by the power supply; an aerosol precursor, which in use is aerosolised by the aerosol generating unit to generate an aerosol; and a delivery system for delivery of the aerosol to a user.

The power supply may be a battery. The battery may be removable from the aerosol generating apparatus, e.g. for the purpose of battery recycling.

A drawback with known aerosol generating apparatuses is the risk of short circuiting of electrical components (e.g. the battery) during battery removal/disposal.

In spite of the effort already invested in the development of aerosol generating apparatuses further improvements are desirable.

### SUMMARY

In a first aspect the present disclosure provides a battery pack for an aerosol generating apparatus, the battery pack comprising:
a housing having an open end for insertion of a battery into the housing; and
an end cap mountable to the housing so as to close the open end of the housing, the end cap comprising at least one electrical contact provided on an inner surface of the end cap.

In some examples, the end cap may be axially slidable relative to the housing from an operation configuration to a removal configuration in which the at least one electrical contact is spaced from the open end of the housing by a greater distance than in the operation configuration. The battery pack may comprise a locking arrangement configured to lock the end cap to the housing in the removal configuration such that the end cap is fixed i.e. axially fixed relative to the housing. In effect, the locking arrangement is configured to fix the spacing of the at least one electrical contact from the open end of the housing.

In this way, by transitioning from the operation configuration (in which the at least one electrical contact is configured to be electrically connected to a battery and/or other electrical components within the battery pack), to the removal configuration, the at least one electrical contact can be fixed spaced away from the battery and/or the other electrical components in the battery pack, thereby terminating the electrical connection therebetween to reduce a risk of short circuit.

In some examples, the locking arrangement may be configured to irreversibly lock the end cap to the housing in the removal configuration such that it is not possible to transition from the removal configuration to the operation configuration.

In this way, the at least one electrical contact of the end cap can be irreversibly electrically disconnected from the battery and/or other electrical components within the battery pack during/prior to battery removal/disposal. Thus, a risk of short circuiting the battery during battery removal/disposal can be reduced, or completely eliminated.

The housing may define a battery chamber in which the battery may be received. The battery chamber may be defined by one or more peripheral side walls of the housing. The housing/chamber may be elongate having a longitudinal axis. In some examples, the housing (e.g. the peripheral side walls) may be a substantially tubular. For example, the housing may have a substantially circular, or substantially elliptical/oval or stadium shaped, cross-section in the transverse direction (i.e. perpendicular to the longitudinal axis). The housing may have an end wall axially opposite the open end of the housing. The end wall may by integral with the peripheral side walls. In some examples, the battery pack may have one or more pack electrical contacts at the end wall e.g. extending through the end wall into the battery chamber. The one or more pack electrical contacts may be configured to electrically connect to a battery inserted inside the battery chamber and/or to corresponding electrical contacts on the aerosol generating apparatus e.g. so as to enable electrical connection between the battery and a heating element of the aerosol generating apparatus.

The housing may house a battery e.g. in the battery chamber. The housing (e.g. the battery chamber) may house a controller such as a printed circuit board (PCB). The controller may be configured to control operation of the aerosol generating apparatus, such as power supply to a heating element of the aerosol generating apparatus. The controller may be electrically connected to the battery. The battery and/or the controller may be electrically connected to the at least one electrical contact on the end cap in the operation configuration, and electrically disconnected from the at least one electrical contact on the end cap in the removal configuration.

In some examples, the end cap may comprise a cap portion and an inner portion.

The cap portion may be sized and shaped so as to fully cover the open end of the housing, thereby closing it.

The end cap may be reversibly engageable with a body of the aerosol generating apparatus so as to secure the battery pack inside the aerosol generating apparatus during operation, and allow for battery pack removal from the aerosol generating apparatus. The end cap may be reversibly engageable with the body of the aerosol generating apparatus via a screw connection, or a bayonet connection. The cap portion may be sized and/or shaped in a corresponding manner to an open end of the body so as to cover the open end. In some examples, the cap portion may have a substantially circular, or substantially elliptical/oval or stadium-shaped cross-section in the transverse direction.

The at least one electrical contact may be located on the cap portion, e.g. on an inner surface of the cap portion facing the open end of the housing. The at least one electrical contact of the end cap may comprise a planar electrical contact or planar electrical contact portion. The at least one electrical contact may comprise an axial portion extending axially towards the open end of the housing. The planar electrical contact portion may be provided at an axial end of the axial portion distal the cap portion of the end cap. The at least one electrical contact may be a sprung electrical contact, e.g. a serpentine-shaped sprung electrical contact. The end cap may comprise exactly two electrical contacts of the type described above.

The inner portion of the end cap may depend axially from the cap portion i.e. axially towards the battery chamber, e.g. from an inner surface of the cap portion. The inner portion may have a smaller width (transverse to the axial extension of the inner portion from the cap portion) than the width/diameter of the cap portion. The inner portion may have a smaller diameter than the width/diameter of the cap portion. A radially outer surface of the inner portion of the end cap may be located radially inwardly relative to a radially outer surface/edge of the cap portion.

The inner portion may extend circumferentially. For example, the inner portion may be provided as a tubular sleeve axially depending from the cap portion. Alternatively, the inner portion may be provided as one or more arms each axially depending from the cap portion i.e. from the inner surface of the cap portion. When there is a plurality of arms, the arms may be circumferentially (and e.g. regularly) spaced from one another. In some examples, there may be just two arms, i.e. a first arm and a second arm. The first arm and the second arm may be diametrically opposed to one another on the inner surface of the cap portion.

In some examples, the inner portion of the end cap may be at least partially nested within the housing at least in the operation configuration. For example, the inner portion may at least partially axially extend into the housing i.e. into the battery chamber at least in the operation configuration. In this way, engagement between the end cap and the housing can be facilitated.

In some examples, the inner portion of the end cap may be rotatable relative to the housing. To this end, the end cap may be rotatably mountable to the housing. The inner portion may be rigidly fixed to the cap portion (e.g. may be integrally formed with the cap portion) such that rotation of the cap portion relative to the housing also rotates the inner portion of the end cap.

The end cap, e.g. the inner portion of the end cap, may at least partially comprise the locking arrangement.

In some examples, the locking arrangement may comprise one or more cap locking elements located on the end cap (e.g. on the inner portion of the end cap). The locking arrangement may comprise one or more housing locking elements located on the housing. The cap locking element(s) may be mutually engageable with the housing locking element(s) so as to lock the end cap to the housing in the removal configuration such that the cap portion of the end cap is fixedly spaced from the housing along the axial direction. In some examples, the mutual engagement between the housing locking element(s) and the cap locking element(s) may be irreversible.

There may be an equal number of cap and housing locking elements. In this way, each cap locking element may be engageable with a respective housing locking element. For example, the locking arrangement may comprise two or more (e.g. just two) cap locking elements and equal number of housing locking elements.

The/each cap locking element may be located on the inner portion of the end cap. In this way, the/each cap locking element can be axially spaced from the cap portion, in a direction towards the housing. In some examples, the/each cap locking element may be located at the distal end of the inner portion (i.e. at the end of the inner portion axially opposite the cap portion). In some examples, the/each cap locking element may be located on a radially outer surface of the inner portion. In this way, when the inner portion of the end cap is at least partially nested within the housing, the/each cap locking element can face the housing to facilitate engagement with the housing locking element(s).

When the locking arrangement comprises a plurality of cap locking elements, the plurality of cap locking elements may be circumferentially spaced from one another along a circumference of the end cap (e.g. along the circumference of the inner portion of the end cap). When the end cap comprises just two cap locking elements, the cap locking elements may be diametrically opposed to one another. When the locking arrangement comprises a plurality of cap locking elements, and the end cap comprises a plurality of arms, each cap locking element may be provided on a respective arm, e.g. at its distal end.

The/each housing locking element may be located on the peripheral side wall(s) of the housing. The/each housing locking element may be located proximal the open end of the housing i.e. closer to the open end of the housing than to the end wall. When the locking arrangement comprises a plurality of housing locking elements and a plurality of cap locking elements, the housing locking elements may be arranged on the housing (e.g. on the peripheral side wall(s)) in a manner which corresponds to the manner in which the cap locking elements are arranged on (e.g. the internal portion of) the end cap. For example, the housing locking elements may be circumferentially spaced from one another by the same angle as the circumferentially spaced cap locking elements. There may be one or more pairs of diametrically opposed housing locking elements.

In the operation configuration, the/each cap locking element is axially spaced from the/each housing locking element such that the/each cap locking element is disengaged from the/each housing locking element. For example, in the operation configuration, the/each cap locking element may be positioned at a greater depth in the battery chamber (i.e. at a greater axial distance from the housing opening) than the/each housing locking element. In this way, upon pulling the end cap out away from the housing (i.e. axially sliding the end cap away from the open end of the housing), the/each cap locking element can be pulled into axially alignment with the/each housing locking element so as to enable mutual engagement thereof.

In addition to being mutually axially spaced, in some examples, the/each cap locking element may be circumferentially offset from the/each housing locking element by a predetermined amount in the operation configuration. Consequently, transitioning from the operation configuration to the removal configuration may include rotating the end cap relative to the housing by the predetermined amount so as to circumferentially align the cap locking element and the housing locking element to enable their mutual engagement. For example, the predetermined amount may be an angle of at least 10 degrees, or at least 15 degrees, or at least 30 degrees, or at least 45 degrees, or at least 60 degrees, or at least 80 degrees. The predetermined amount may be an angle of 150 degrees or less, 120 degrees or less, 90 degrees or less, such as 90 degrees, or 60 degrees or less, or 45 degrees or less.

In the removal configuration, the/each cap locking element is aligned (i.e. both axially and circumferentially) with the/each housing locking element to enable mutual engagement thereof.

In some examples, the cap locking element(s) and the housing locking element(s) may be mutually resiliently biased towards each other so as to enable engagement therebetween in the removal configuration. The resilient bias may be effected for example, by spring loading of the cap locking element(s) and/or the housing locking element, and/or by material properties of the end cap and/or the housing. That is, at least a portion of the end cap and/or the housing may be formed of a resiliently deformable material to impart the required bias on the cap locking element and/or the housing locking element respectively.

In some examples, the inner portion of the end cap may be resiliently deformable so as to resiliently bias the/each cap locking element towards the/each housing locking element for engagement therewith. For example, when the inner portion of the end cap is at least partially nested within the housing, the inner portion may be resiliently deformed radially inwardly for insertion into the housing. This results in a radially outward bias being imparted on the inner portion and consequently on the cap locking element(s) located on the inner portion.

The/each cap locking element may be one of a male-type connector (i.e. comprising a protrusion or extension, such as a tab or hook) and a female-type connector (comprising a receptacle, such as a notch, recess or aperture), and the/each housing locking element may be the other of a male-type connector and a female-type connector.

When the/each cap locking element is a male-type connector, the/each cap locking element may extend radially relative to the inner portion of the end cap. For example, the cap locking element may extend radially outwardly relative to the inner portion of end cap. In this way, when the inner portion of the end cap is at least partially nested within the housing, the/each cap locking element can extend radially outward towards the housing so as to enable engagement with the housing locking element(s) in the removal configuration.

When the housing locking element is a male-type connector, the housing locking element may extend radially relative to the housing. For example, the housing locking element may extend radially inwardly from the peripheral side wall(s) of the housing. In this way, when the inner portion of the end cap is at least partially nested within the housing, the housing locking element can extend radially towards the inner portion of the end cap so as to enable engagement with the/each cap locking element in the removal configuration.

In a second aspect, the present disclosure provides an aerosol generating apparatus comprising:
a body comprising a cavity; and
a battery pack according to the first aspect, the battery pack being housed within the cavity;
wherein the end cap is reversibly engageable with the body.

As discussed with reference to the first aspect, the end cap may be reversibly engageable with the body so as to secure the battery pack inside the aerosol generating apparatus during operation, and to allow for battery pack removal from the aerosol generating apparatus. The end cap may be reversibly engageable with the body via a screw connection, or a bayonet connection. The cap portion may be sized and/or shaped in a corresponding manner to an open end of the body so as to cover the open end. In some examples, the cap portion may have a substantially circular, or substantially elliptical/oval or stadium-shaped cross-section in the transverse direction.

In some examples, the end cap may be rotatably mounted to the body, at its open end, to reversibly close the cavity.

In a third aspect, the present disclosure provides a method of removing a battery from an aerosol generating apparatus according to the second aspect, the method comprising:
disengaging the end cap from the body;
placing the battery pack in the removal configuration;
removing the battery pack from the aerosol generating apparatus through an open end of the cavity.

Thus, during battery removal, the end cap is in the removal configuration, with the at least one electrical contact being electrically disconnected from electrical components within the battery pack, thereby reducing a risk of short circuit during battery removal/disposal.

Disengaging the end cap from the body may include rotating the end cap relative to the longitudinal axis of the aerosol generating apparatus, e.g. to undo a screw or bayonet connection.

Placing the battery pack in the removal configuration includes axially sliding the end cap relative to the housing. It may further include configuring the locking arrangement so as to fix the end cap relative to the housing. For example, this may include aligning the cap locking element(s) with the housing locking element(s) to enable mutual engagement thereof.

When the cap locking element(s) and the housing locking element(s) are circumferentially offset, configuring the locking arrangement to fix the end cap relative to the housing may involve rotating the end cap relative to the housing so as to circumferentially align the cap locking element(s) with the housing locking element(s) to enable mutual engagement thereof. This may be performed prior to or after axially aligning the cap locking element(s) with the housing locking element(s) by axially sliding the end cap relative to the housing.

The preceding summary is provided for purposes of summarizing some examples to provide a basic understanding of aspects of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features, aspects, and advantages of the subject matter described herein will become apparent from the following text and the accompanying drawings.

### BRIEF DESCRIPTION OF THE FIGURES

Aspects, features and advantages of the present disclosure will become apparent from the following description of examples in reference to the appended drawings in which like numerals denote like elements.
**Fig. 1** is a block system diagram showing an example aerosol generating apparatus.
**Fig. 2** is a block system diagram showing an example implementation of the apparatus of Fig. 1, where the aerosol generating apparatus is configured to generate aerosol from a liquid precursor.
**Figs. 3A and 3B** are schematic diagrams showing an example implementation of the apparatus of Fig. 2.
**Fig. 4** is a block system diagram showing an example implementation of the apparatus of Fig. 1, where the aerosol generating apparatus is configured to generate aerosol from a solid precursor.
**Fig. 5** is a schematic diagram showing an example implementation of the apparatus of Fig. 4.
**Fig. 6** is a schematic diagram showing an operation configuration of a battery pack for use with the apparatus of Fig. 1 or Fig. 4.
**Figs 7** **and** **8** are schematic diagrams respectively showing a removal configuration of the battery pack of Fig. 6.

### DETAILED DESCRIPTION OF EMBODIMENTS

Before describing several examples implementing the present disclosure, it is to be understood that the present disclosure is not limited by specific construction details or process steps set forth in the following description and accompanying drawings. Rather, it will be apparent to those skilled in the art having the benefit of the present disclosure that the systems, apparatuses and/or methods described herein could be embodied differently and/or be practiced or carried out in various alternative ways.

Unless otherwise defined herein, scientific and technical terms used in connection with the presently disclosed inventive concept(s) shall have the meanings that are commonly understood by those of ordinary skill in the art, and known techniques and procedures may be performed according to conventional methods well known in the art and as described in various general and more specific references that may be cited and discussed in the present specification.

Any patents, published patent applications, and non-patent publications mentioned in the specification are hereby incorporated by reference in their entirety.

All examples implementing the present disclosure can be made and executed without undue experimentation in light of the present disclosure. While particular examples have been described, it will be apparent to those of skill in the art that variations may be applied to the systems, apparatus, and/or methods and in the steps or in the sequence of steps of the methods described herein without departing from the concept, spirit, and scope of the inventive concept(s). All such similar substitutions and modifications apparent to those skilled in the art are deemed to be within the spirit, scope, and concept of the inventive concept(s) as defined by the appended claims.

The use of the term "a" or "an" in the claims and/or the specification may mean "one," as well as "one or more," "at least one," and "one or more than one." As such, the terms "a," "an," and "the," as well as all singular terms, include plural referents unless the context clearly indicates otherwise. Likewise, plural terms shall include the singular unless otherwise required by context.

The use of the term "or" in the present disclosure (including the claims) is used to mean an inclusive "and/or" unless explicitly indicated to refer to alternatives only or unless the alternatives are mutually exclusive. For example, a condition "A or B" is satisfied by any of the following: A is true (or present) and B is false (or not present), A is false (or not present) and B is true (or present), and both A and B are true (or present).

As used in this specification and claim(s), the words "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless otherwise explicitly stated as incompatible, or the physics or otherwise of the embodiments, examples, or claims prevent such a combination, the features of examples disclosed herein, and of the claims, may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of example(s), embodiment(s), or dependency of claim(s). Moreover, this also applies to the phrase "in one embodiment," "according to an embodiment," and the like, which are merely a stylistic form of wording and are not to be construed as limiting the following features to a separate embodiment to all other instances of the same or similar wording. This is to say, a reference to 'an,' 'one,' or 'some' embodiment(s) may be a reference to any one or more, and/or all embodiments, or combination(s) thereof, disclosed. Also, similarly, the reference to "the" embodiment may not be limited to the immediately preceding embodiment. Further, all references to one or more embodiments or examples are to be construed as non-limiting to the claims.

The present disclosure may be better understood in view of the following explanations, wherein the terms used that are separated by "or" may be used interchangeably:
As used herein, an **"aerosol generating apparatus"** (or **"electronic(e)-cigarette")** may be an apparatus configured to deliver an aerosol to a user for inhalation by the user. The apparatus may additionally/alternatively be referred to as a "smoking substitute apparatus", if it is intended to be used instead of a conventional combustible smoking article. As used herein a combustible "smoking article" may refer to a cigarette, cigar, pipe or other article, that produces smoke (an aerosol comprising solid particulates and gas) via heating above the thermal decomposition temperature (typically by combustion and/or pyrolysis).

As used herein, an **"aerosol generating component"** may refer to a component that includes an aerosol precursor. The component may include an aerosol generating unit e.g. it may be arranged as a cartomizer. The component may include a mouthpiece. The component may include an information carrying medium. The component may include a storage portion, e.g. a reservoir or tank, for storage of the aerosol precursor.

With liquid or gel implementations of the aerosol precursor, e.g. an e-liquid, the component may be referred to as a "capsule" or a "pod" or an "e-liquid consumable". In some embodiments, the aerosol precursor component may be affixed to the device body to form the aerosol generating apparatus. In these embodiments, the reservoir/tank may be refillable.

With solid material implementations of the precursor, e.g. tobacco or reconstituted tobacco formulation, the component may be referred to as a "stick" or "package" or "heat-not-burn consumable". In a heat-not-burn consumable, the mouthpiece may be implemented as a filter and the consumable may be arranged to carry the precursor. The consumable may be implemented as a dosage or pre-portioned amount of material, including a loose-leaf product.

The aerosol generating component e.g. the capsule, pod, stick, package or consumable may be for releasable coupling to a device body to form the aerosol generating apparatus.

The device body may comprise a power supply for powering the aerosol generating unit.

An aerosol generated by the apparatus may comprise an aerosol with particle sizes of 0.2 - 7 microns, or less than 10 microns, or less than 7 microns. This particle size may be achieved by control of one or more of: heater temperature; cooling rate as the vapour condenses to an aerosol; flow properties including turbulence and velocity. The generation of aerosol by the aerosol generating apparatus may be controlled by an input device. The input device may be configured to be user-activated, and may for example include or take the form of an actuator (e.g. actuation button) and/or an airflow sensor.

Each occurrence of the aerosol generating apparatus being caused to generate aerosol for a period of time (which may be variable) may be referred to as an **"activation"** of the aerosol generating apparatus. The aerosol generating apparatus may be arranged to allow an amount of aerosol delivered to a user to be varied per activation (as opposed to delivering a fixed dose of aerosol), e.g. by activating an aerosol generating unit of the apparatus for a variable amount of time, e.g. based on the strength/duration of a draw of a user through a flow path of the apparatus (to replicate an effect of smoking a conventional combustible smoking article).

The aerosol generating apparatus may be portable. As used herein, the term **"portable"** may refer to the apparatus being for use when held by a user.

As used herein, an **"aerosol generating system"** may be a system that includes an aerosol generating apparatus and optionally other circuitry/components associated with the function of the apparatus, e.g. one or more external devices and/or one or more external components (here "external" is intended to mean external to the aerosol generating apparatus).

As used herein, an "external device" and "external component" may include one or more of a: a charging device, a mobile device (which may be connected to the aerosol generating apparatus, e.g. via a wireless or wired connection); a networked-based computer (e.g. a remote server); a cloud-based computer; any other server system.

An example aerosol generating system may be a system for managing an aerosol generating apparatus. Such a system may include, for example, a mobile device, a network server, as well as the aerosol generating apparatus.

As used herein, an **"aerosol"** may include a suspension of precursor, including as one or more of: solid particles; liquid droplets; gas. Said suspension may be in a gas including air. An aerosol herein may generally refer to/include a vapour. An aerosol may include one or more components of the precursor.

As used herein, a **"precursor"** may include one or more of a: liquid; solid; gel; loose leaf material; other substance. The precursor may be processed by an aerosol generating unit of an aerosol generating apparatus to generate an aerosol. The precursor may include one or more of: an active component; a carrier; a flavouring. The active component may include one or more of nicotine; caffeine; a cannabidiol oil; a non-pharmaceutical formulation, e.g. a formulation which is not for treatment of a disease or physiological malfunction of the human body. The active component may be carried by the carrier, which may be a liquid, including propylene glycol and/or glycerine. The term "flavouring" may refer to a component that provides a taste and/or a smell to the user. The flavouring may include one or more of: Ethylvanillin (vanilla); menthol, Isoamyl acetate (banana oil); or other. The precursor may include a substrate, e.g. reconstituted tobacco to carry one or more of the active component; a carrier; a flavouring.

As used herein, a **"storage portion"** may be a portion of the apparatus adapted to store the precursor. It may be implemented as fluid-holding reservoir or carrier for solid material depending on the implementation of the precursor as defined above.

As used herein, a **"flow path"** may refer to a path or enclosed passageway through an aerosol generating apparatus, e.g. for delivery of an aerosol to a user. The flow path may be arranged to receive aerosol from an aerosol generating unit. When referring to the flow path, upstream and downstream may be defined in respect of a direction of flow in the flow path, e.g. with an outlet being downstream of an inlet.

As used herein, a **"delivery system"** may be a system operative to deliver an aerosol to a user. The delivery system may include a mouthpiece and a flow path. The delivery system may be at least partly within the aerosol generating component.

As used herein, a **"flow"** may refer to a flow in a flow path. A flow may include aerosol generated from the precursor. The flow may include air, which may be induced into the flow path via a puff by a user.

As used herein, a **"puff"** (or **"inhale"** or **"draw")** by a user may refer to expansion of lungs and/or oral cavity of a user to create a pressure reduction that induces flow through the flow path.

As used herein, an **"aerosol generating unit"** may refer to a device configured to generate an aerosol from a precursor. The aerosol generating unit may include a unit to generate a vapour directly from the precursor (e.g. a heating system or other system) or an aerosol directly from the precursor (e.g. an atomiser including an ultrasonic system, a flow expansion system operative to carry droplets of the precursor in the flow without using electrical energy or other system). A plurality of aerosol generating units to generate a plurality of aerosols (for example, from a plurality of different aerosol precursors) may be present in an aerosol generating apparatus.

As used herein, a **"heating system"** may refer to an arrangement of at least one heating element, which is operable to aerosolise a precursor once heated. The at least one heating element may be electrically resistive to produce heat from the flow of electrical current therethrough. The at least one heating element may be arranged as a susceptor to produce heat when penetrated by an alternating magnetic field. The heating system may be configured to heat a precursor to below 300 or 350 degrees C, including without combustion. The heating system may be provided within the aerosol generating component or within the device body.

As used herein, an **"information carrying medium"** may include one or more arrangements for storage of information on any suitable medium. Examples include: a computer readable medium; a Radio Frequency Identification (RFID) transponder; codes encoding information, such as optical (e.g. a bar code or QR code) or mechanically read codes (e.g. a configuration of the absence or presents of cutouts to encode a bit, through which pins or a reader may be inserted).

As used herein **"heat-not-burn"** (or **"HNB"** or **"heated precursor")** may refer to the heating of a precursor, typically tobacco, without combustion, or without substantial combustion (i.e. localised combustion may be experienced of limited portions of the precursor, including of less than 5% of the total volume).

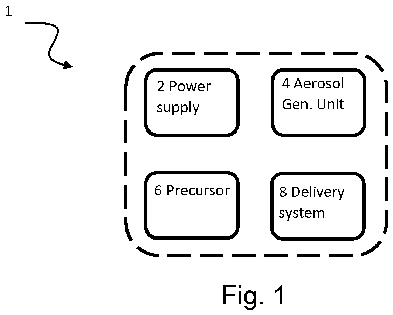

Referring to Fig. 1, an example aerosol generating apparatus 1 includes a power supply 2, for supply of electrical energy. The apparatus 1 includes an aerosol generating unit 4 that is driven by the power supply 2. The power supply 2 may include an electric power supply in the form of a battery and/or an electrical connection to an external power source. The apparatus 1 includes a precursor 6, which in use is aerosolised by the aerosol generating unit 4 to generate an aerosol. The apparatus 1 includes a delivery system 8 for delivery of the aerosol to a user.

Electrical circuitry (not shown in figure 1) may be implemented to control the interoperability of the power supply 2 and aerosol generating unit 4.

In variant examples, which are not illustrated, the power supply 2 may be omitted since, e.g. an aerosol generating unit implemented as an atomiser with flow expansion may not require a power supply.

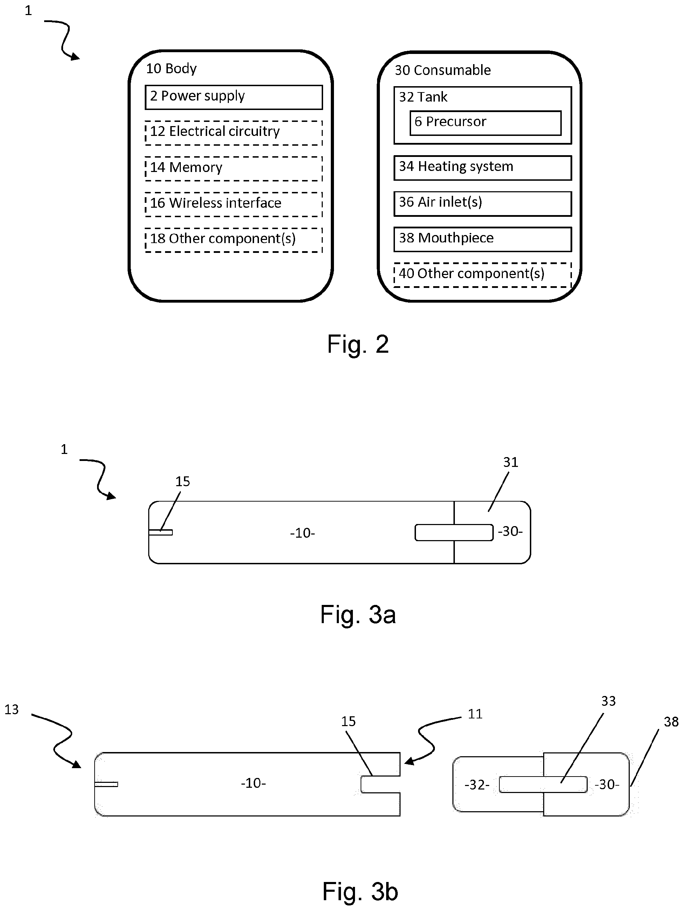

Fig. 2 shows an implementation of the apparatus 1 of Fig. 1, where the aerosol generating apparatus 1 is configured to generate aerosol from a liquid precursor.

In this example, the apparatus 1 includes a device body 10 and a consumable 30.

In this example, the body 10 includes the power supply 2. The body may additionally include any one or more of electrical circuitry 12, a memory 14, a wireless interface 16, one or more other components 18.

The electrical circuitry 12 may include a processing resource for controlling one or more operations of the body 10 and consumable 30, e.g. based on instructions stored in the memory 14.

The wireless interface 16 may be configured to communicate wirelessly with an external (e.g. mobile) device, e.g. via Bluetooth.

The other component(s) 18 may include one or more user interface devices configured to convey information to a user and/or a charging port, for example (see e.g. Fig. 3).

The consumable 30 includes a storage portion implemented here as a tank 32 which stores the liquid precursor 6 (e.g. e-liquid). The consumable 30 also includes a heating system 34, one or more air inlets 36, and a mouthpiece 38. The consumable 30 may include one or more other components 40.

The body 10 and consumable 30 may each include a respective electrical interface (not shown) to provide an electrical connection between one or more components of the body 10 with one or more components of the consumable 30. In this way, electrical power can be supplied to components (e.g. the heating system 34) of the consumable 30, without the consumable 30 needing to have its own power supply.

In use, a user may activate the aerosol generating apparatus 1 when inhaling through the mouthpiece 38, i.e. when performing a puff. The puff, performed by the user, may initiate a flow through a flow path in the consumable 30 which extends from the air inlet(s) 34 to the mouthpiece 38 via a region in proximity to the heating system 34.

Activation of the aerosol generating apparatus 1 may be initiated, for example, by an airflow sensor in the body 10 which detects airflow in the aerosol generating apparatus 1 (e.g. caused by a user inhaling through the mouthpiece), or by actuation of an actuator included in the body 10. Upon activation, the electrical circuitry 12 (e.g. under control of the processing resource) may supply electrical energy from the power supply 2 to the heating system 34 which may cause the heating system 32 to heat liquid precursor 6 drawn from the tank to produce an aerosol which is carried by the flow out of the mouthpiece 38.

In some examples, the heating system 34 may include a heating filament and a wick, wherein a first portion of the wick extends into the tank 32 in order to draw liquid precursor 6 out from the tank 32, wherein the heating filament coils around a second portion of the wick located outside the tank 32. The heating filament may be configured to heat up liquid precursor 6 drawn out of the tank 32 by the wick to produce the aerosol.

In this example, the aerosol generating unit 4 is provided by the above-described heating system 34 and the delivery system 8 is provided by the above-described flow path and mouthpiece 38.

In variant embodiments (not shown), any one or more of the precursor 6, heating system 34, air inlet(s) 36 and mouthpiece 38, may be included in the body 10. For example, the mouthpiece 36 may be included in the body 10 with the precursor 6 and heating system 32 arranged as a separable cartomizer.

Figs. 3A and 3B show an example implementation of the aerosol generating apparatus 1 of Fig. 2. In this example, the consumable 30 is implemented as a capsule/pod, which is shown in Fig. 3A as being physically coupled to the body 10, and is shown in Fig. 3B as being decoupled from the body 10.

In this example, the body 10 and the consumable 30 are configured to be physically coupled together by pushing the consumable 30 into an aperture in a top end 11 the body 10, with the consumable 30 being retained in the aperture via an interference fit.

In other examples (not shown), the body 10 and the consumable 30 could be physically coupled together in other ways, e.g. by screwing one onto the other, through a bayonet fitting, or through a snap engagement mechanism, for example.

The body 10 also includes a charging port (not shown) at a bottom end 13 of the body 10.

The body 10 also includes a user interface device configured to convey information to a user. Here, the user interface device is implemented as a light 15, which may e.g. be configured to illuminate when the apparatus 1 is activated. Other user interface devices are possible, e.g. to convey information haptically or audibly to a user.

In this example, the consumable 30 has an opaque cap 31, a translucent tank 32 and a translucent window 33. When the consumable 30 is physically coupled to the body 10 as shown in Fig. 3A, only the cap 31 and window 33 can be seen, with the tank 32 being obscured from view by the body 10. The body 10 includes a slot 15 to accommodate the window 33. The window 33 is configured to allow the amount of liquid precursor 6 in the tank 32 to be visually assessed, even when the consumable 30 is physically coupled to the body 10.

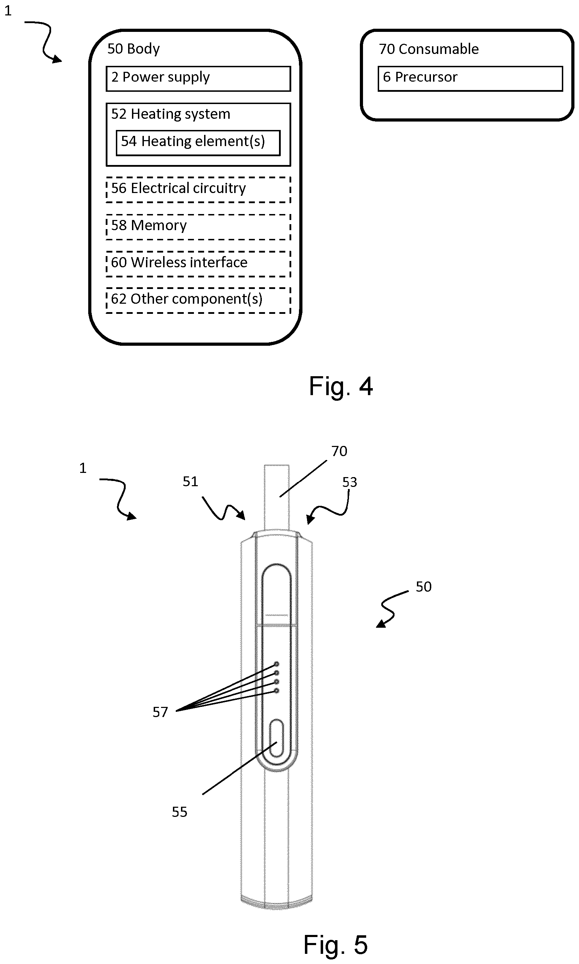

Fig. 4 shows an implementation of the apparatus 1 of Fig. 1, where the aerosol generating apparatus 1 is configured to generate aerosol by a heat-not-burn process.

In this example, the apparatus 1 includes a device body 50 and a consumable 70.

In this example, the body 50 includes the power supply 2 and a heating system 52. The heating system 52 includes at least one heating element 54. The body may additionally include any one or more of electrical circuitry 56, a memory 58, a wireless interface 60, one or more other components 62.

The electrical circuitry 56 may include a processing resource for controlling one or more operations of the body 50, e.g. based on instructions stored in the memory 58.

The wireless interface 60 may be configured to communicate wirelessly with an external (e.g. mobile) device, e.g. via Bluetooth.

The other component(s) 62 may include an actuator, one or more user interface devices configured to convey information to a user and/or a charging port, for example (see e.g. Fig. 5).

The body 50 is configured to engage with the consumable 70 such that the at least one heating element 54 of the heating system 52 penetrates into the solid precursor 6 of the consumable. In use, a user may activate the aerosol generating apparatus 1 to cause the heating system 52 of the body 50 to cause the at least one heating element 54 to heat the solid precursor 6 of the consumable (without combusting it) by conductive heat transfer, to generate an aerosol which is inhaled by the user.

Fig. 5 shows an example implementation of the aerosol generating device 1 of Fig. 4.

As depicted in Fig. 5, the consumable 70 is implemented as a stick, which is engaged with the body 50 by inserting the stick into an aperture at a top end 53 of the body 50, which causes the at least one heating element 54 of the heating system 52 to penetrate into the solid precursor 6.

The consumable 70 includes the solid precursor 6 proximal to the body 50, and a filter distal to the body 50. The filter serves as the mouthpiece of the consumable 70 and thus the apparatus 1 as a whole. The solid precursor 6 may be a reconstituted tobacco formulation.

In this example, the at least one heating element 54 is a rod-shaped element with a circular transverse profile. Other heating element shapes are possible, e.g. the at least one heating element may be blade-shaped (with a rectangular transverse profile) or tube-shaped (e.g. with a hollow transverse profile).

In this example, the body 50 includes a cap 51. In use the cap 51 is engaged at a top end 53 of the body 50. Although not apparent from Fig. 5, the cap 51 is moveable relative to the body 50. In particular, the cap 51 is slidable and can slide along a longitudinal axis of the body 50.

The body 50 also includes an actuator 55 on an outer surface of the body 50. In this example, the actuator 55 has the form of a button.

The body 50 also includes a user interface device configured to convey information to a user. Here, the user interface device is implemented as a plurality of lights 57, which may e.g. be configured to illuminate when the apparatus 1 is activated and/or to indicate a charging state of the power supply 2. Other user interface devices are possible, e.g. to convey information haptically or audibly to a user.

The body may also include an airflow sensor which detects airflow in the aerosol generating apparatus 1 (e.g. caused by a user inhaling through the consumable 70). This may be used to count puffs, for example.

In this example, the consumable 70 includes a flow path which transmits aerosol generated by the at least one heating element 54 to the mouthpiece of the consumable.

In this example, the aerosol generating unit 4 is provided by the above-described heating system 52 and the delivery system 8 is provided by the above-described flow path and mouthpiece of the consumable 70.

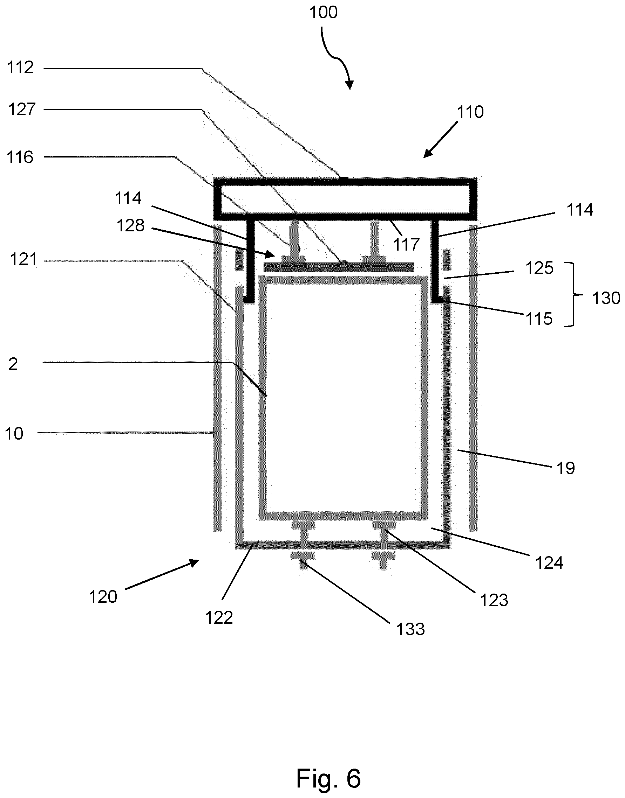

With reference to Figs 6 to 8, the aerosol generating apparatus 1 implemented according to any of the preceding examples may comprise a battery pack 100. The battery pack 100 may enclose the power supply 2 provided in the form of a battery. An example implementation of the battery pack 100 is shown in Figs 6 to 8. With reference to Fig. 6, the battery pack 100 comprises a housing 120 having an open end 128 for insertion of a battery 126 into the housing, and an end cap 110 mountable to the housing 120 so as to close the open end 128 of the housing. The end cap 120 comprises at least one, and more specifically two, electrical contacts 116 provided on an inner surface 117 of the end cap 110.

The housing 120 defines a battery chamber 124 in which a battery 126 is received. The battery chamber 124 is defined by peripheral side wall(s) 121 of the housing 120. In this example, the housing is elongate having a longitudinal axis and the peripheral side wall is a single, substantially tubular side wall defining the batter chamber 124. Thus, the housing 120 has a substantially circular cross-section in the transverse direction (i.e. perpendicular to the longitudinal axis). The housing also has an end wall 122 axially opposite the open end 128 of the housing 120. The end wall 122 is integral with the peripheral side wall 121. The battery pack 100 further has a pair of pack electrical contacts 123 located at the end wall 122, and more specifically, extending through the end wall into the battery chamber 124. The pack electrical contacts 124 are configured to electrically connect to the battery 126 inside the battery chamber and to corresponding electrical contacts 133 of the aerosol generating apparatus 1 so as to facilitate electrical connection between the battery 2 and the heating element 54. In addition to the battery 2, the housing 120 houses a controller 127 in the battery chamber 124 which is implemented using a printed circuit board (PCB). The controller 127 is electrically connected to the battery 2. The controller 127 is configured to control operation of the aerosol generating apparatus 1, e.g. to control a timing and/or amount of power supply from the battery 2 to the heating element 54.

The end cap 110 comprises a cap portion 112 and an inner portion 114. The cap portion 112 is sized and shaped so as to fully cover the open end 128 of the housing 120, thereby closing it.

The end cap 110 is reversibly engageable with the body 10 of the aerosol generating apparatus 1 so as to secure the battery pack 100 inside a cavity 19 of the aerosol generating apparatus 1 during operation, and allow for battery pack removal from the aerosol generating apparatus. To this end, the cap portion 112 is sized and shaped in a corresponding manner to an open end of a cavity 19. In this way, the cap portion 112 can cover an opening of and matingly engage with the aerosol generating apparatus 1 to secure the battery pack 100 inside the aerosol generating apparatus 1. In this example, the cap portion 110 has a substantially circular cross-section in the transverse direction which matches the shape and size of the open end of the cavity 19 of the body 10 of the aerosol generating apparatus.

The electrical contacts 116 of the end cap 110 are located on the inner surface 117 of the cap portion 112 facing the open end 128 of the housing 120. In this example, each electrical contact 116 comprises an axial portion extending axially towards the open end 128 of the housing 120 and a planar contact portion provided at the axial end of the axial portion distal the cap portion 112 of the end cap 110, at a substantially right angle to the axial portion. Alternatively, the electrical contacts 116 may be instead implemented as sprung electrical contacts, e.g. a serpentine-shaped sprung electrical contacts.

The inner portion 114 of the end cap depends axially from the inner surface 117 of the cap portion 112 towards the battery chamber 124. The inner portion 114 is radially inner relative to the cap portion 112 such that a radially outer surface of the inner portion 114 is located radially inwardly relative to a radially outer surface/edge of the cap portion 112. The inner portion is provided as a pair of arms 114, each axially depending from the inner surface 117 of the cap portion 112. The arms 114 are diametrically opposed to one another on the inner surface of the cap portion. In an alternative example, the inner portion 114 may be provided as a continuous tubular sleeve axially depending from the cap portion 112.

In this example, the arms 114 of the end cap 110 are partially nested within the housing 110 (in both the operation and the removal configuration) such that the arms axially extend into the housing i.e. into the battery chamber 124.

Furthermore, in this example, the end cap 110 is rotatably mountable to the housing 120. The arms 114 are rigidly fixed to the cap portion 112 by being integrally formed therewith. Thus, rotation of the cap portion 112 relative to the housing 120 also rotates the arms relative to the housing.

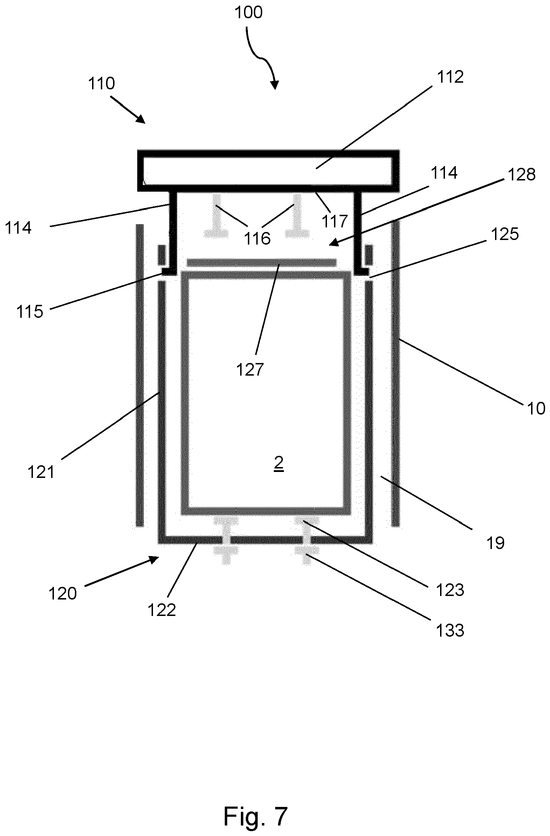

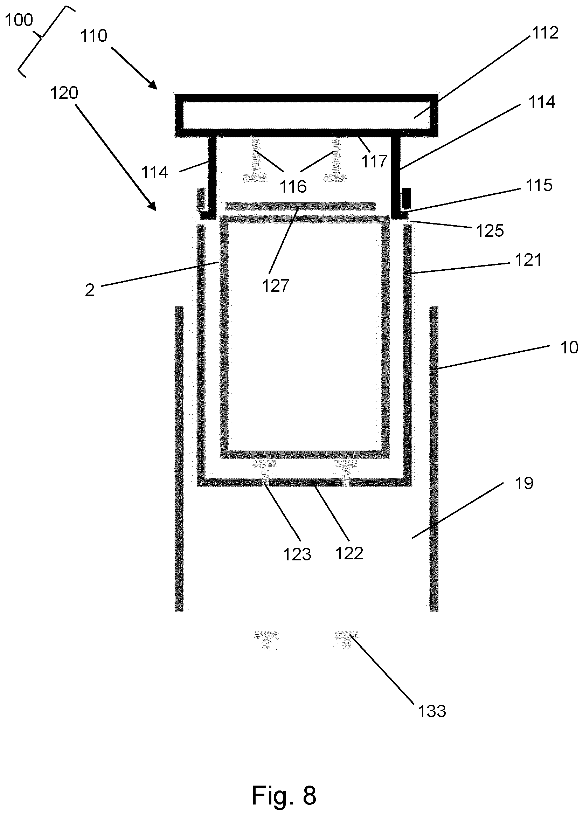

The end cap 110 is axially slidable relative to the housing 120 from an operation configuration (shown in Fig. 6) to a removal configuration (shown in Figs 7 and 8) in which the electrical contacts 116 on the cap are spaced from the open end 128 of the housing 120 by a greater distance than in the operation configuration.

In the operation configuration, which is shown in Fig. 6, the controller 127 is electrically connected to the electrical contacts 116 on the end cap 110 (and therefore to the battery 2), whereas in the removal configuration, the controller 127 is electrically disconnected from the electrical contacts (and therefore from the battery 2) to reduce a risk of short circuit during battery removal/disposal.

In the examples of Figs 6 to 8, the battery pack 100 further comprises a locking arrangement 130 configured to lock the end cap 110 to the housing 120 in the removal configuration such that the end cap 110 is axially fixed relative to the housing 120.

The locking arrangement 130 comprises a pair of cap locking elements 115 located on the arms 114 of the end cap 110, and a pair of housing locking elements 125 located on the housing 120. In alternative embodiments, it is possible for the locking arrangement to comprise any number of cap locking elements and any number of housing locking elements. The cap locking elements 115 are mutually engageable with the housing locking elements 125 so as to lock the end cap 110 to the housing 120 in the removal configuration such that the cap portion 112 of the end cap is fixedly spaced from the housing 120 along the axial direction.

Each cap locking element 115 is located on a respective arm 114 of the end cap 110, and more specifically, at the distal end of its respective arm (i.e. at the end of the arm axially opposite the cap portion 112). Furthermore, each cap locking element 115 is located on a radially outer surface of its respective arm 114. In this way, when the arms 114 of the end cap are at nested within the housing 120, each cap locking element 115 can face the housing 120 to facilitate engagement with the housing locking elements 125a.

Furthermore, in this example, each cap locking element 115 is a male-type connector (i.e. comprising a protrusion or extension, such as a tab or hook) extending radially outwardly relative to the respective arm 114 on which the cap locking element is located. In this way, when the arms 114 of the end cap 110 are nested within the housing 120, each cap locking element 115 extends radially outwardly towards the housing 120 so as to enable engagement with the housing locking elements 125 in the removal configuration.

Each housing locking element 125 is a female-type connector. That is, each housing locking element comprises a receptacle, such as a notch or aperture, for receiving a corresponding male-type cap locking element 115. In alternative embodiments, each cap locking element may be a female-type connector and each housing locking element may be a male-type connector instead.

Each housing locking element 125 is located on the peripheral side wall 121 of the housing 120, proximal the open end 128 of the housing i.e. closer to the open end of the housing than to the end wall 122. The housing locking elements 125 are diametrically opposed to one another.

In the operation configuration, which is shown in Fig. 6, each cap locking element 115 is axially spaced from each housing locking element 125 such that each cap locking element 115 is disengaged from each housing locking element 125. Specifically, in this example, each cap locking element 115 is positioned at a greater depth in the battery chamber 124 (i.e. at a greater axial distance form the open end 128 of the housing 120) than each housing locking element 125. In this way, upon pulling the end cap 110 away from the housing 120 (i.e. axially sliding the end cap away from the open end of the housing), each cap locking element can be axially aligned with a respective housing locking element so as to enable mutual engagement thereof.

In addition to being mutually axially spaced, in this example, the cap locking elements 115 are circumferentially offset from the housing locking elements 125 by a predetermined amount in the operation configuration. Consequently, transitioning from the operation configuration to the removal configuration includes rotating the end cap 110 relative to the housing 120 by the predetermined amount so as to circumferentially align the cap locking element and the housing locking element to enable their mutual engagement. The predetermined amount is at least 10 degrees, or at least 15 degrees, or at least 30 degrees, or at least 45 degrees, or at least 60 degrees, or at least 80 degrees. The predetermined amount is 150 degrees or less, 120 degrees or less, 90 degrees or less, or 60 degrees or less, or 45 degrees or less. In this example, the predetermined amount is 90 degrees.

In the removal configuration, which is shown in Figs 7 and 8, each cap locking element 115 is aligned (i.e. both axially and circumferentially) with its respective housing locking element 125 to enable mutual engagement thereof.

Furthermore, in the present example, the mutual engagement between the housing locking elements 115 and the cap locking elements 125 is irreversible such that it is not possible to transition from the removal configuration to the operation configuration and re-establish electrical contact between the electrical contacts 116 on the end cap 110 and the controller 127 (and thus the battery 2). That is, once the battery pack 100 is in the removal configuration, it is not possible to put it back into the operation configuration by pushing the end cap 110 towards the open end 128 of the housing 120 due to the locking between the male-type cap locking elements 115 and the female-type cap locking elements 125, as shown in Figs 7 and 8.

This is achieved by resiliently biasing the cap locking elements 115 towards the housing locking elements 125. In this example, the resilient bias is imparted by the arms 114 of the end cap 110 which are resiliently deformable. Thus, when nested within the housing 120, the arms 114 are resiliently deformed radially inwardly for insertion into the housing which results in a radially outward bias being imparted on the arms and consequently on the cap locking elements 115 located on thereon.

Thus, in use, upon alignment of a cap locking elements 115 with a respective housing locking element 125, the resilient bias imparted on the cap locking element 115 propels the cap locking element into its respective housing locking element 125 (i.e. notch), thereby preventing a user from transitioning the battery pack 100 into the operation configuration by pushing the cap portion 112 towards the housing 120.

Finally, the present disclosure also provides a method of removing the battery pack 100 described above from an aerosol generating apparatus 1 implemented according to one of the above examples.

The method includes rotating the end cap 110 relative to the longitudinal axis of the aerosol generating apparatus 1. This disengages the end cap 110 from the body 10 of the aerosol generating apparatus 1 to enable extraction of the battery pack 100 from the cavity 19 of the body 10. Rotating the end cap 110 can simultaneously, or subsequently, circumferentially align the cap locking elements 115 with the housing locking elements 125. The method further involves pulling the end cap 110 away from the open end 128 of the housing 120, thereby axially aligning the cap locking elements 115 with the housing locking elements 125. This causes the cap locking elements 115 to engage the housing locking elements 125 such that the battery pack 100 is locked in the removal configuration shown in Fig. 7. In the removal configuration, the electrical contacts 116 on the end cap 110 are electrically disconnected from the battery 2 and the controller 127, enabling safe battery removal from the aerosol generating apparatus 1. Thus, the battery pack 100 can be subsequently safely extracted from the aerosol generating apparatus 1 by pulling the end cap away from the open end of the cavity 19, as shown in Fig. 8. As the end cap 110 is rigidly fixed to the housing 120 in the removal configuration, pulling the end cap 110 away from the cavity 19 results in extraction of the whole battery pack 100. Thus, a risk of short circuit during battery removal/disposal is greatly reduced.

## Claims

1. A battery pack (100) for an aerosol generating apparatus (1), the battery pack comprising:
a housing (120) having an open end (128) for insertion of a battery (2) into the housing; and
an end cap (110) mountable to the housing (120) so as to close the open end of the housing, the end cap comprising at least one electrical contact (116) provided on an inner surface (117) of the end cap;
wherein the end cap (110) is axially slidable relative to the housing (120) from an operation configuration to a removal configuration in which the at least one electrical contact is spaced from the open end of the housing by a greater distance than in the operation configuration;
the battery pack (100) further comprising a locking arrangement (130) configured to lock the end cap to the housing in the removal configuration such that the end cap is axially fixed relative to the housing.

2. The battery pack (100) of claim 1, wherein the locking arrangement (130) is configured to irreversibly lock the end cap (110) to the housing (120) in the removal configuration to prevent transition from the removal configuration to the operation configuration.

3. The battery pack (100) of claim 1 or 2, wherein the locking arrangement (130) comprises one or more cap locking elements (115) located on the end cap (110) and one or more housing locking elements (125) located on the housing (120), the one or more cap locking elements being mutually engageable with the one or more housing locking elements so as to lock the end cap to the housing in the removal configuration.

4. The battery pack (100) of claim 3, wherein the end cap (110) comprises a cap portion (112) comprising the at least one electrical contact (116), and an inner portion (114) axially depending from the cap portion towards the open end (128) of the housing (120), the one or more cap locking elements (115) being located on the inner portion (114) of the end cap.

5. The battery pack (100) of claim 4, wherein the inner portion (114) of the end cap is resiliently deformable so as to resiliently bias the/each cap locking element (115) towards the/each housing locking element (125).

6. The battery pack (100) of any claim 4 or 5, wherein the inner portion (114) comprises a plurality of arms each axially depending from the cap portion (112), the plurality of arms being mutually circumferentially spaced.

7. The battery pack (100) of any one of claims 2 to 6, wherein the/each cap locking element (115) is one of a male-type connector and a female-type connector, and the/each housing locking element (125) is the other of a male-type connector and a female-type connector.

8. The battery pack (100) of any one of claims 2 to 7, wherein, in the operation configuration, the/each cap locking element (115) is circumferentially offset from the/each housing locking element (125) by a predetermined amount.

9. The battery pack (100) of claim 8, wherein the predetermined amount is an angle from 30 degrees to 90 degrees.

10. The battery pack (100) of any one of the preceding claims, wherein the end cap (110) is rotatably mounted to the housing (120).

11. The battery pack (100) of any one of the preceding claims, wherein the end cap (110) is at least partially nested within the housing (120) at least in the operation configuration.

12. The battery pack (100) of any one of the preceding claims, wherein the battery pack further comprises the battery (2) and/or a controller (127), wherein in the operation configuration, the at least one electrical contact (116) is electrically connected to each of the battery and/or the controller, and in the removal configuration, the at least one electrical contact is electrically disconnected from each of the battery and/or controller.

13. An aerosol generating apparatus (1) comprising:
a body (10) comprising a cavity (19); and
a battery pack (100) according to any one of claims 1 to 12, the battery pack being housed within the cavity;
wherein the end cap (110) is reversibly engageable with the body (10).

14. A method of removing a battery from an aerosol generating apparatus (1) according to claim 13, the method comprising:
disengaging the end cap (110) from the body (10);
placing the battery pack (100) in the removal configuration;
removing the battery pack (100) from the aerosol generating apparatus through an open end of the cavity (19).
